# EUROPÄISCHE PATENTSCHRIFT

(11) **EP 0 427 915 B1**
(45) Veröffentlichungstag und Bekanntmachung des Hinweises auf die Patenterteilung: **15.09.1993**
(21) Anmeldenummer: 90112886.8
(22) Anmeldetag: 06.07.1990
(51) Int. Cl.: F16F 15/12

(54) **Drehschwingungstilger**
Torsional vibration damper
Amortisseur de vibrations de torsion

(30) Priorität: 11.11.1989 DE 3937669
(43) Veröffentlichungstag der Anmeldung: 22.05.1991
(73) Patentinhaber: Firma Carl Freudenberg, 69469 Weinheim (DE)
(72) Erfinder: Müller, Klaus, D-6943 Birkenau (DE); Schwibinger, Peter, Dr., D-6945 Hirschberg (DE); Andrä, Rainer-Horst, Dr., D-6250 Limburg 5 (DE)

(56) Entgegenhaltungen:
- DE-A- 2 933 586
- DE-A- 3 535 286
- FR-A- 2 604 764
- GB-A- 2 195 003

## Beschreibung

Die Erfindung betrifft einen Drehschwingungstilger für eine Welle, bei dem der, Schwungring und die Nabe durch gleichmäßig in Umfangsrichtung verteilte, erste Federelemente verbunden sind und bei dem zwischen den ersten Federelementen zweite Federelemente von im wesentlichen säulenförmiger Gestalt vorgesehen sind, die mit dem einen Ende an dem Schwungring festgelegt und durch die bei einer frei festlegbaren höheren Drehzahl auf sie einwirkenden Fliehkräfte den ersten Federelementen parallel geschaltet sind.

Ein solcher Drehschwingungstilger ist aus der DE-A-3535 286 bekannt. Die zweiten Federelemente bestehen hierbei jeweils aus zwei einander in radialer Richtung überlappenden Teilelementen, welche als einseitige Hebel gestaltet und bei einer vorgegebenen Drehzahl fliehkraftbedingt miteinander in Eingriff bringbar und die ersten Federelementen parallel schaltbar sind. Das Unwuchtverhalten des Drehschwingungs-Tilgers ist wenig befriedigend und die Dauerhaltbarkeit noch unzureichend.

Der Erfindung liegt die Aufgabe zugrunde, einen Drehschwingungstilger dieser Art mit dem Ziel einer verbesserten Gebrauchsdauer und eine verbesserten Unwuchtverhaltens weiterzuentwickeln.

Diese Aufgabe wird erfindungsgemäß bei einem Drehschwingungstilger der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Drehschwingungstilger ist es vorgesehen, daß die zweiten Federelemente, welche sich im wesentlichen in Umfangsrichtung erstrecken, mit beiden Enden festgelegt sind, nämlich zum einen an dem Schwungring und zum anderen an der Nabe. Sie sind hierdurch gut geführt und vor unzulässig großen Deformierungen geschützt, welche sich bei den bekannten Ausführungen beim Erreichen hoher Drehzahlen ergeben können. Für die Erzielung einer guten Dauerhaltbarkeit ist das von großem Vorteil.

Die zweiten Federelemente sind zwischen den solcher Art festgelegten Enden bei stillstehendem Drehschwingungstilger mit einer in Richtung der Rotationsachse weisenden Einbiegung versehen, die bei niedrigen Drehzahlen weitgehend erhalten bleibt und den zweiten Federelementen eine große Weichheit verleiht. Die drehelastische Abstützung des Schwungringes wird hierdurch maßgeblich durch die Federelastizität der ersten Federelemente bestimmt.

Mit ansteigender Drehzahl wird die Einbiegung der zweiten Federelemente durch die auf sie einwirkenden Fliehkräfte zunehmend eliminiert, wodurch die zweiten Federelemente zunehmend in eine gestreckte und zwischen den beiden Enden elastisch vorgespannte Gestalt überführt werden. Die Federhärte steigt in gleichem Maße und erreicht bei einer frei festlegbaren Drehzahl einen Wert, der in nennenswertem Maße in die umfangselastische Abstützung des Schwungringes eingeht. Die Resonanzfrequenz des Schwungringes erfährt eine dementsprechende Verlagerung, was es ermöglicht, breitbandig in einem großen Frequenzbereich eine gute Dämpfungswirkung zu erzielen. Unwuchtprobleme werden hierbei weitgehend vermieden.

Die zweiten Federelemente und die ersten Federelemente sind zweckmäßig einander im wesentlichen spiegelbildlich zugeordnet. Der vorgeschlagene Drehschwingungstilger weist hierdurch eine drehrichtungsunabhängige Wirksamkeit auf, was sowohl für seine Herstellung als auch für seine Verwendung von großem Vorteil ist.

Die zweiten Federelemente und die ersten Federelemente können im Bereich ihrer an dem Schwungring festgelegten Enden ineinander übergehend ausgebildet sein, was die Herstellung vereinfacht und es ermöglicht, bei hohen Drehzahlen zusätzlich zu den zweiten Federelementen auch in den ersten Federelementen eine elastische Vorspannung zu erzeugen. Insbesondere in bezug auf die Vermeidung von Unwuchtproblemen bei hohen Drehzahlen ist diese Möglichkeit von großem Vorteil.

Die zweiten Federelemente können beiderseits mit Enden versehen sein, die in einem im wesentlichen übereinstimmenden Abstand von der Rotationsachse einerseits an dem Schwungring und andererseits an einem nach außen weisenden Vorsprung der Nabe festgelegt sind. Der erfindungsgemäß ausgenutzte Effekt der fliehkraftbedingten Überführung einer zunächst eingebogenen Feder in die Gestalt einer säulenförmigen Feder tritt hierbei besonders deutlich in Erscheinung.

Die zweiten Federlemente können im Bereich der Einbiegungen Zusatzmassen enthalten, um eine Eliminierung der Einbiegungen bei einer vergleichsweise verminderten Drehzahl zu erreichen. Die Zusatzmassen können austauschbar festgelegt sein, um eine nachträgliche Anpassung des Drehschwingungstilgers an besondere Erfordernisse des Anwendungsfalles zu ermöglichen.

Der vorgeschlagene Drehschwingungstilger läßt sich als drehzahl- und amplitudenadapptiver Drehschwingungstilger bezeichnen. Er eignet sich insbesondere zur Verwendung im Antriebsstrang eines Kraftfahrzeuges.

Eine beispielhafte Ausführung des erfindungsgemäßen Drehschwingungstilgers ist in der in der Anlage beigefügten Zeichnung in der Vorderansicht dargestellt. Sie wird nachfolgend näher beschrieben:

Der gezeigte Drehschwingungstilger ist für die Kardanwelle eines Kraftfahrzeuges bestimmt. Der Schwungring 1 und die Nabe 2 sind durch gleichmäßig in Umfangsrichtung verteilte erste Federelemente 3 verbunden, wobei zwischen den ersten Federelementen 3 zweite Federelemente 4 von im wesentlichen säulenförmiger Gestalt vorgesehen sind. Die zweiten Federelemente weisen beiderseits Enden 5 auf, die in einem im wesentlichen übereinstimmenden Abstand von der Rotationsachse 6 einerseits an radial nach außen weisenden Vorsprüngen der Nabe 2 und andererseits an den ersten Federelementen 3 und über diese an dem Schwungring 1 festgelegt sind. Sie haben dadurch eine im wesentlichen umfangsgerichtete Erstreckung.

Die zweiten Federelemente 4 sind so erzeugt, daß sich bei nicht drehendem Drehschwingungstilger in der Zwischenzone zwischen ihren Enden 5 eine in Richtung der Rotationsachse 6 weisende Einbiegung 7 ergibt. Diese Einbiegung erfährt durch die auf die zweiten Federelemente 4 mit zunehmender Drehzahl einwirkenden Fliehkräfte eine zunehmend Eliminierung, wobei sich eine zunehmende Streckung der Gestalt ergibt. Die in Umfangsrichtung zunächst sehr große Weichheit und elastische Nachgiebigkeit geht dadurch allmählich über in eine größere Federhärte, welche diejenige der ersten Federelemente 3 überlagert und problemlos übersteigen kann. Die Umfangselastizität, mit der der Schwungring 1 auf der Nabe 2 abgestützt ist, erfährt dadurch eine zunehmende Verhärtung, was eine Veränderung der Resonanzfrequenz zur Folge hat. Hierdurch ergibt sich in einem breitbandigen Drehzahlbereich eine gute Schwingungstilgung erzielen.

Die zweiten Federelemente 4 sind bezogen auf die ersten Federelemente 3 einander spiegelbildlich zugeordnet, wodurch der gezeigte Drehschwingungs-Tilger eine drehrichtungs unabhängige Wirksamkeit aufweist. Er ist durch die sich bei Erreichen der Maximaldrehzahl ergebende Abstützung der zweiten Federelemente 4 auf der radialen Innenseite des Schwungringes 1 vor unzulässig großen Deformierungen der zweiten Federelemente geschützt, was die Erzielung einer guten Dauerhaltbarkeit begünstigt. Gleichzeitig wird ein Teil dieser Abstützwirkung auf die ersten Federelemente 3 übertragen. Diese sind in dem Bereich ihres Außenumfanges einstückig in die zweiten Federelemente 4 übergehend ausgebildet, was eine gewisse Formfixierung der ersten Federelemente 3 durch die zweiten Federelemente 4, bezogen auf die Umfangsrichtung, bei Erreichen höherer Drehzahlen ermöglicht.

Die zweiten Federelemente 4 sind im Bereich der Einbiegungen 7 mit axialen Durchbrechungen versehen, in welche Zusatzmassen 8 eines frei wählbaren Gewichtes nachträglich einpreßbar sind. Der Beginn der elastischen Verformung läßt sich hierdurch auf eine niedrigere Drehzahl verlegen, so daß sich, insgesamt gesehen, in einem erweiterten Drehzahlbereich die Tilgerwirkung zur Unterdrückung von Drehschwingungen nutzen läßt.

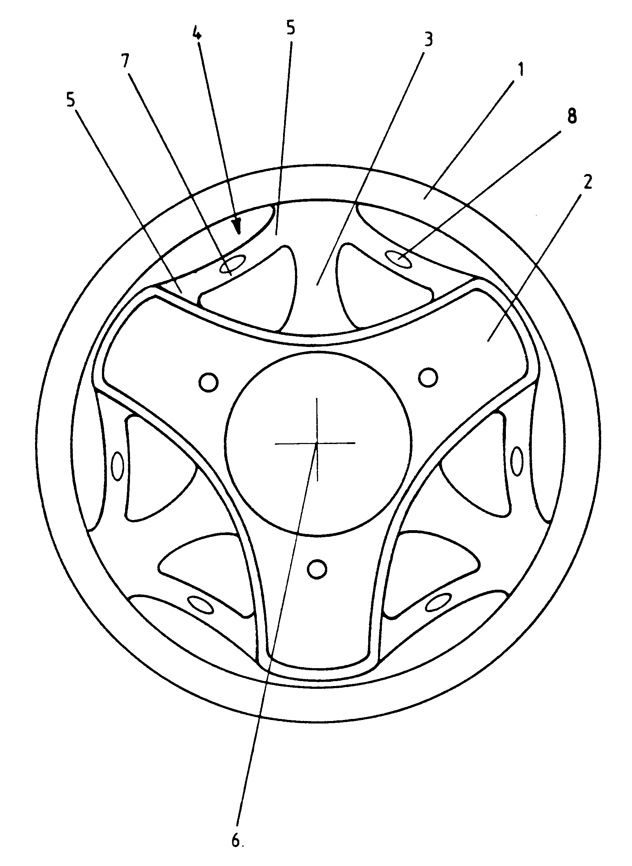

## Patentansprüche

1. Drehschwingungstilger für eine Welle, bei dem der Schwungring (1) und die Nabe (2) durch gleichmäßig in Umfangsrichtung verteilte, erste Federelemente (3) verbunden sind und bei dem zwischen den ersten Federelementen (3) zweite Federelemente (4) von im wesentlichen säulenförmiger Gestalt vorgesehen sind, die mit dem einen Ende (5) an dem Schwungring (1) festgelegt und bei einer frei festlegbaren, höheren Drehzahl den ersten Federelementen (3) parallel geschaltet sind, **dadurch gekennzeichnet, daß** die zweiten Federelemente (4) mit dem anderen Ende (5) an der Nabe (2) befestigt sind, daß die zweiten Federelemente (4) im nicht drehendem Zustand des Drehschwingungstilgers zwischen den Enden (5) mit einer in Richtung zur Rotationsachse (6) weisenden Einbiegung (7) versehen sind und daß die Einbiegung (7) durch die bei einer frei wählbaren, höheren Drehzahl auf die zweiten Federelemente (4) einwirkenden Fliehkräfte eliminierbar ist.

2. Drehschwingungstilger nach Anspruch 1, dadurch gekennzeichnet, daß die zweiten Federelemente (4) bezogen auf die ersten Federelemente (3) im wesentlichen einander spiegelbildlich zugeordnet sind.

3. Drehschwingungstilger nach Anspruch 1 bis 2, dadurch gekennzeichnet, daß die zweiten Federelemente (4) und die ersten Federelemente (3) im Bereich ihrer an dem Schwungring (1) festgelegten Enden (5) ineinander übergehend ausgebildet sind.

4. Drehschwingungstilger nach Anspruch 3, dadurch gekennzeichnet, daß die zweiten Federelemente (4) beiderseits durch Enden (5) begrenzt sind, die in einem im wesentlichen übereinstimmenden Abstand von der Rotationsachse (6) einerseits an einem nach außen weisenden Vorsprung der Nabe (2) und andererseits an den ersten Federelementen (3) festgelegt sind.

5. Drehschwingungstiler nach Anspruch 1 bis 4, dadurch gekennzeichnet, daß die zweiten Federelemente (4) im Bereich der Einbiegungen (7) Zusatzmassen (8) aufweisen.

## Claims

1. A torsional vibration damper for a shaft, in which the flywheel (1) and the hub (2) are connected by first spring elements (3) evenly distributed in the peripheral direction and in which second spring elements (4) of substantially column-shaped design are provided between the first spring elements (3), which second spring elements (4) are fixed by one end (5) on the flywheel (1) and are connected in parallel with the first spring elements (3) at a higher speed which can be freely determined, characterised in that the second spring elements (4) are fastened by the other end (5) on to the hub (2), in that the second spring elements (4) are provided with an inward bend (7) pointing in the direction of the axis of rotation (6) in the non-rotating condition of the torsional vibration damper between the ends (5), and in that the inward bend (7) can be eliminated by the centrifugal forces acting on the second spring elements (4) at a higher rotational speed which can be freely selected.

2. A torsional vibration damper according to claim 1, characterised in that the second spring elements (4) are arranged essentially as mirror images of one another relative to the first spring elements (3).

3. A torsional vibration damper according to claim 1 or 2, characterised in that the second spring elements (4) and the first spring elements (3) are configured so that they merge into one another in the region of their ends (5) fixed to the flywheel (1).

4. A torsional vibration damper according to claim 3, characterised in that the second spring elements (4) are bounded on both sides by ends (5), which are fixed on a protrusion of the hub (2) pointing towards the outside, on the one hand, and on the first spring elements (3), on the other hand, at an essentially equal distance from the axis of rotation (6).

5. A torsional vibration damper according to any of claims 1 to 4, characterised in that the second spring elements (4) have additional masses (8) in the region of the inward bends (7).

## Revendications

1. Amortisseur de vibrations de torsion pour un arbre, dans lequel le volant annulaire (1) et le moyeu (2) sont reliés par des premiers éléments élastiques (3) répartis uniformément dans une direction circonférentielle et dans lequel il est prévu entre les premiers éléments élastiques (3) des seconds éléments élastiques (4) profilés dans l'essentiel en forme de colonnes, qui sont fixées par une extrémité (5) sur le volant annulaire (1) et qui sont sollicitées en parallèle aux premiers éléments élastiques (3) pour une vitesse de rotation assez élevée et pouvant être librement déterminée, caractérisé en ce que les seconds éléments élastiques (4) sont fixés par leur autre extrémité (5) sur le moyeu (2), en ce que les seconds éléments élastiques (4) sont pourvus, entre leurs extrémités (5), d'une courbure (7) orientée en direction de l'axe de rotation (6) et en ce que la courbure (7) peut être éliminée par les forces centrifuges agissant sur les seconds éléments élastiques pour une vitesse de rotation assez élevée et pouvant être librement choisie.

2. Amortisseur de vibrations de torsion selon la revendication 1, caractérisé en ce que les seconds éléments élastiques (4) sont disposés de façon sensiblement mutuellement symétrique par rapport aux premiers éléments élastiques (3).

3. Amortisseur de vibrations de torsion selon une des revendications 1 et 2, caractérisé en ce que les seconds éléments élastiques (4) et les premiers éléments élastiques (3) sont agencés de façon à se rejoindre mutuellement dans la zone de leurs extrémités (5) fixées sur le volant annulaire (1).

4. Amortisseur de vibrations de torsion selon la revendication 3, caractérisé en ce que les seconds éléments élastiques (4) sont délimités des deux côtés par des extrémités (5) qui sont fixées, à une distance d'espacement de l'axe de rotation (6) essentiellement en concordance, d'une part sur une saillie, dirigée vers l'extérieur, du moyeu (2) et d'autre part sur les premiers éléments élastiques (3).

5. Amortisseur de vibrations de torsion selon une des revendications 1 à 4, caractérisé en ce que les seconds éléments élastiques (4) comportent des masses additionnelles (8) dans la zone des courbures (7).
